# EUROPÄISCHE PATENTSCHRIFT

(11) **EP 0 561 867 B1**
(45) Veröffentlichungstag und Bekanntmachung des Hinweises auf die Patenterteilung: **26.10.1994**
(21) Anmeldenummer: 92900373.9
(22) Anmeldetag: 12.12.1991
(51) Int. Cl.: G01N 29/04, G01N 17/00, G01N 29/10

(54) **VERFAHREN ZUR LAUFZEITMESSUNG VON ULTRASCHALL BEI DER IMPULS-REFLEXIONSMETHODE**
PROCESS FOR MEASURING ULTRA-SOUND PROPAGATION TIME DURING THE PULSE REFLECTION METHOD
PROCEDE DE MESURE DU TEMPS DE PROPAGATION D'ULTRA-SONS LORS DE L'APPLICATION D'UN PROCEDE DE REFLEXION D'IMPULSIONS

(30) Priorität: 15.12.1990 DE 4040190
(43) Veröffentlichungstag der Anmeldung: 29.09.1993
(73) Patentinhaber: KERNFORSCHUNGSZENTRUM KARLSRUHE GMBH, D-76021 Karlsruhe (DE); Pipetronix GmbH, 76131 Karlsruhe (DE)
(72) Erfinder: STRIPF, Helmut, D-7514 Eggenstein-Leopoldshafen (DE); KÜHNER, Thomas, D-7500 Karlsruhe 1 (DE); HERTH, Armin, D-7500 Karlsruhe (DE)
(74) Vertreter: Rückert, Friedrich, Dr.
(86) Internationale Anmeldenummer: DE9100964
(87) Internationale Veröffentlichungsnummer: WO9210746

(56) Entgegenhaltungen:
- EP-A- 0 361 890
- WO-A-89/04497
- US-A- 3 583 211
- US-A- 4 909 091
- US-A- 4 953 405

## Beschreibung

Die Erfindung betrifft ein Verfahren zur Laufzeitmessung von Ultraschall bei der Impuls-Reflexionsmethode nach dem Oberbegriff des Patentanspruchs 1.

Zur Bestimmung der Restwanddicke von Rohrleitungen wird in einem Korrosionsprüfmolch ein Laufzeitmeßverfahren mittels Ultraschall nach dem Impuls-Reflexions-Prinzip eingesetzt.

Der durch den Sendeimpuls am Prüfkopf ausgelöste Ultraschallimpuls durchläuft die Ölvorlaufstrecke, wird zu einem Teil an der Rohrinnenwand reflektiert und gelangt zum Prüfkopf zurück. Die restliche Schallenergie dringt in die Rohrwandung ein, wird zu einem großen Teil an der Rohraußenwand reflektiert und gelangt ebenfalls zum Prüfkopf zurück. Je nach Schallschwächung kommt es zu Mehrfachreflexionen innerhalb der Rohrwandung.

Die Ermittlung der Laufzeiten erfolgt mit Hilfe getakteter Zähler, die durch die Echoimpulsfolge bei Überschreiten vorgegebener Schwellwerte gestartet bzw. gestoppt werden. Die Vorlaufstrecke ergibt sich aus der Laufzeit zwischen dem Sendeimpuls und dem Vorwandecho, die Wanddicke aus der Laufzeit zwischen Vorwandecho und erstem Rückwandecho. Die folgenden Rückwandechos bleiben unberücksichtigt.

Bei rauhen Oberflächen ist das Echobild ein Abbild der vom Sensor erfaßten Oberflächenstruktur. Statt eines einzelnen Echoimpulses (wie bei glatter Oberfläche) wird eine Impulsfolge vom Sensor empfangen. Das Echobild wird aufgeweitet. Die zeitliche Aufweitung ist von der Schallgeschwindigkeit des Mediums abhängig; sie ist somit an der Rückwand unterschiedlich zu der an der Rohrvorwand. Durch diese Gesetzmäßigkeiten kann bei rauhen Wandungen, in Abhängigkeit von der Wandstärke, eine Verschmelzung der Echobilder von Vor- und Rückwand hervorgerufen werden.

Aus der DE 36 38 936 A1 ist ein Verfahren der e. g. Art bekannt, bei dem bei rauher Oberfläche entweder falsche oder überhaupt keine Laufzeiten zur Wandstärkebestimmung gemessen werden können.

Des weiteren ist aus der DE 38 22 699 ein Verfahren bekannt, bei welchem mit Hilfe einer Meßsperrzeit und einer sich zeitlich ändernden Triggerschwelle für das Rückwandecho eine eindeutige Laufzeitmessung möglich ist. Dieses Verfahren versagt jedoch bei rauhen Oberflächen, wenn der erste Vorwandreflex niedriger als der zweite ist oder wenn die Aufweitung der Impulsfolge zeitlich länger als die Zeitdauer der sich ändernden Triggerschwelle ist (z. B. bei Wandstärkezunahme in einem Rohrsegment).

Aus der WO-A-89/04497 ist außerdem ein Verfahren zur Detektion von Innenkorrosionen an Bohrlochröhren bekannt, bei welchem die Impulsechos, welche in einem Zeitfenster liegen, nach elektronischer Vorbehandlung, wobei Höhe, Breite und Zeitpunkt jedes Impulses ermittelt werden können, an einen Rechner außerhalb des Bohrlochs übertragen werden. Zur Messung in einer Pipeline ist dieses Verfahren wegen der on-line zu bewältigenden Datenflut nicht geeignet.

Aufgabe der Erfindung ist es, ein Verfahren der e. g. Art so zu verbessern, daß auch bei rauhen Oberflächen und bei Ausfall und Verfälschung von Impulsreflexionen Laufzeitmessungen für Dickenbestimmungen und Abnormalitäten zuverlässig durchgeführt werden können.

Die Aufgabe wird durch die kennzeichnenden Merkmale des Patentanspruchs 1 gelöst.

Die Unteransprüche beschreiben vorteilhafte Ausgestaltungen des Verfahrens.

Die Erfindung wird im folgenden mit Hilfe eines Ausführungsbeispiels und anhand der Figuren näher erläutert. Es folgt eine Kurzbeschreibung der Figuren.

Die Fig. 1 zeigt ein Ultraschallechobild.

Die Figuren 2, 3 und 4 zeigen Fehlersituationen der herkömmlichen Laufzeitmessungen.

Die Fig. 5 zeigt ein Blockschaltbild einer Anordnung zur Durchführung des Verfahrens.

Die Figuren 6a, 6b, 7a und 7b zeigen Signalverarbeitungen von zwei unterschiedlichen Ultraschallimpulsen.

Die Figuren 8a, 8b und 8c zeigen beispielhafte Datenreduktionen.

Fig. 9 zeigt das Auswählen der relevanten Daten.

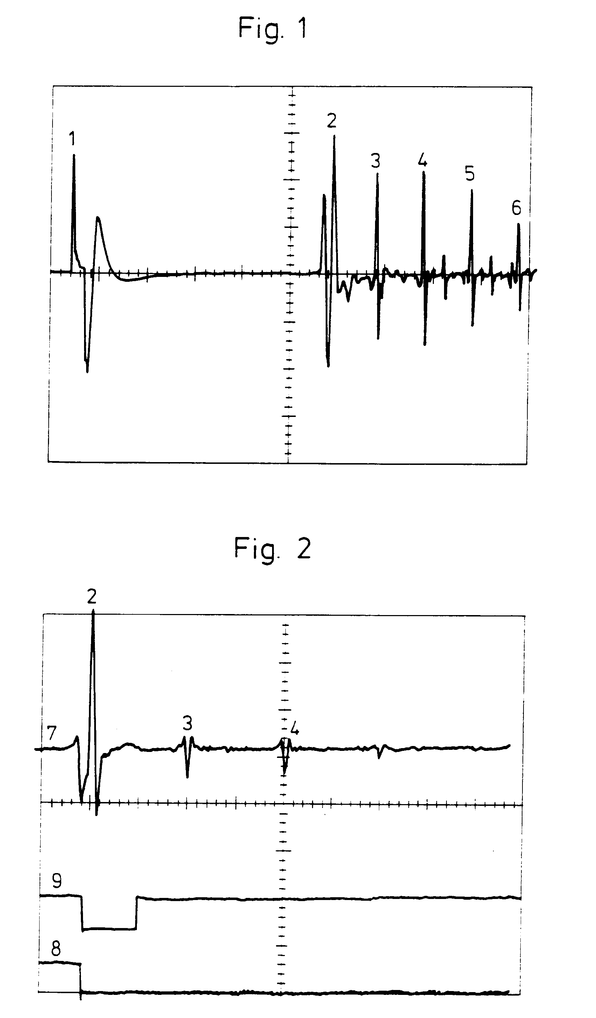

Die Ermittlung der Laufzeiten erfolgt bei der DE 36 38 936 A1 mit Hilfe getakteter Zähler, die durch die Echoimpulsfolge bei Überschreiten vorgegebener Schwellwerte gestartet bzw. gestoppt werden. Die Vorlaufstrecke ergibt sich aus der Laufzeit zwischen dem Sendeimpuls 1 und dem Vorwandecho 2, die Wanddicke aus der Laufzeit zwischen Vorwandecho 2 und erstem Rückwandecho 3. Die folgenden Rückwandechos 4, 5, 6 bleiben unberücksichtigt (Fig. 1).

Wie die bisherigen Messungen gezeigt haben, führt dieses Verfahren häufig zu Fehlinterpretationen bei der Wandstärkenbestimmung, obwohl der tatsächliche Signalverlauf Informationen enthält, die auf die korrekte Wanddicke schließen lassen.

Eine Verbesserung der Echobildauswertung läßt sich folglich dadurch erzielen, daß der gesamte Signalverlauf mit den durch Mehrfachreflexionen erzeugten Folgeimpulsen zur Bestimmung der Wanddicke herangezogen wird.

Dies läßt sich nur realisieren, indem die relevanten Größen der Impulsfolge einem Mikroprozessor-System zugeführt werden und daraus der Wert für die Wandstärke ermittelt und auf seine Richtigkeit überprüft wird.

Die mangelhafte Auswertung des Echosignales mit Hilfe des herkömmlichen Verfahrens zur Laufzeitmessung führt zu fehlenden oder falschen Wanddickenwerten. Im folgenden sind verschiedene Fehlerklassen aufgeführt. Dabei werden Lösungsvorschläge in Verbindung mit der Digitalisierung des Echosignales aufgezeigt. Die jeweiligen Abbildungen zeigen das Echobild 7, das Meßtor der Wandstärkenmessung 8, sowie die Meßsperrblende 9.

Die in Fig. 2 dargestellten Rückwandechos sind zu gering. Das Rückwandechosignal 3, 4 wird durch Interferenzen oder Streuungen so stark gedämpft, daß die Amplitude unterhalb der Triggerschwelle bleibt. Das Meßtor Wandstärke 8 wird folglich nicht geschlossen, und es liegt somit kein Meßwert für die Wandstärke vor. Die Triggerschwelle liegt bei ca. 0,8 V. Ein Herabsetzen dieser Schwelle kann zu Fehlmessungen infolge von Störeinflüssen (Übersprechen) führen. Eine Erhöhung der Empfindlichkeit (bei gleichem Störabstand) kann durch Gleichrichtung und digitale Integration erreicht werden.

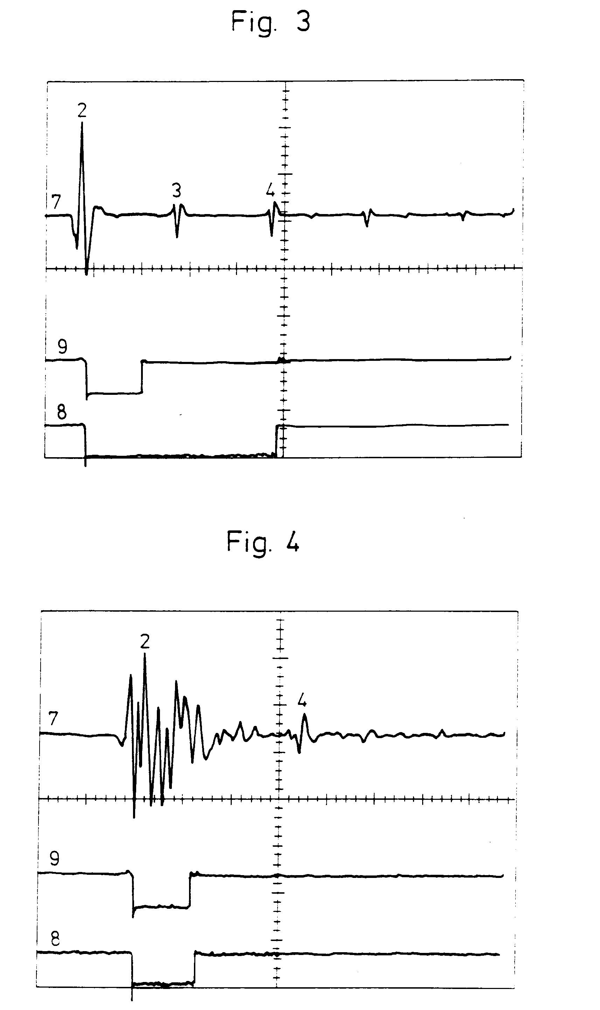

Die Fig. 3 zeigt eine Triggerung auf dem zweiten statt auf dem ersten Rückwandecho. Bedingt durch Interferenzen oder Streuungen kann die Amplitude des zweiten Rückwandechos 4 größer als die Amplitude des ersten Rückwandechos 3 sein. Dies kann dazu führen, daß die Triggerung des Zählers auf dem zweiten Rückwandecho 4 erfolgt und somit das Meßergebnis 8 die doppelte Laufzeit anzeigt. Eine Eliminierung dieses Fehlers ist durch eine Plausibilitätsüberwachung bzw. durch eine Echobildauswertung, die auch den zweiten Außenwandimpuls berücksichtigt, erreichbar.

Die Fig. 4 zeigt den Meßwertausfall im Bereich kleiner Wandstärken oder tiefer Korrosion. Eine rauhe Oberfläche der Vorwand führt zur Aufweitung des Vorwandechoimpulses 2. Statt nur eines Impulses wird eine Echofolge empfangen. Bei geringen Wandstärken (6 mm und weniger) kann dadurch eine Verschmelzung der Echobilder von Vor- und Rückwand hervorgerufen werden. Um eine Fehlmessung zu vermeiden, wird über eine Meßsperrzeit 9 die Schließung des Meßtores für die Wanddickenmessung verhindert. Diese Blende wird auf ca. 1,7 µs eingestellt, was einer Wanddicke von 6 mm entspricht. Geringere Wandstärken lassen sich also nicht erfassen. Vielmehr kann es dazu führen, daß unmittelbar nach Ablauf der Meßsperrzeit 9 das infolge einer rauhen Oberfläche aufgeweitete Echosignal noch oberhalb der Triggerschwelle liegt und somit den Zähler stoppt. Dies führt dann zum Erfassen der Meßsperrzeit als Maß für die Wanddicke 8.

Um Korrosionen tiefer als 6 mm zu messen, bzw. Rohre mit geringer Wandstärke prüfen zu können, bedarf es der Bewertung der Einhüllenden des Echobildes bzw. der Einbeziehung des zweiten und weiterer Rückwandechos.

Während des Prüflaufes kann das vom Detektor empfangene Ultraschallecho durch verschiedene Einwirkungen gedämpft werden, so z. B.
- Eine Deformation des Sensorträgers oder eine Deformation der Leitungswandung kann bewirken, daß einzelne Prüfköpfe unter einen von der Wandungs-Senkrechten abweichenden Winkel einschallen. Die Folge ist die von der Abweichung abhängige Schwächung des empfangenen Echosignals.
- In längeren Ölleitungen kann es vorkommen, daß die Oberfläche von US-Sensoren durch verfestigtes Öl bedeckt wird. Diese Verschmutzung verursacht eine Dämpfung der Ultraschall-Impulse. Daraus resultierend können ab einem Verschmutzungsgrad die voreingestellten Triggerschwellen der Laufzeitmessung nicht mehr überschritten werden; es kann dann keine Messung erfolgen.

Eine voreingestellte hohe Impulsverstärkung kann nicht vorgenommen werden, da bei zu hoher Grundverstärkung die Impulse zu sehr verbreitet werden, dies führt zu fehlerhafter Laufzeitbestimmung.

Nur durch eine individuelle vom Dämpfungsgrad abhängige Verstärkungsnachführung kann in solchen Fällen eine Laufzeitmessung noch ermöglicht werden.

Eine Verbesserung der Auswertung läßt sich somit durch eine Digitalisierung des Echosignales mit anschließender on-line-Auswertung mit Hilfe eines geeigneten Mikroprozessor-Systems erzielen.
Dazu muß zunächst das Echosignal abgetastet, digitalisiert und in einem Zwischenspeicher abgelegt werden. Anschließend werden die Impulse mit Hilfe einer schnellen Hardware aussortiert und deren Amplitude und Zeitzuordnung an den Auswerterechner übergeben.

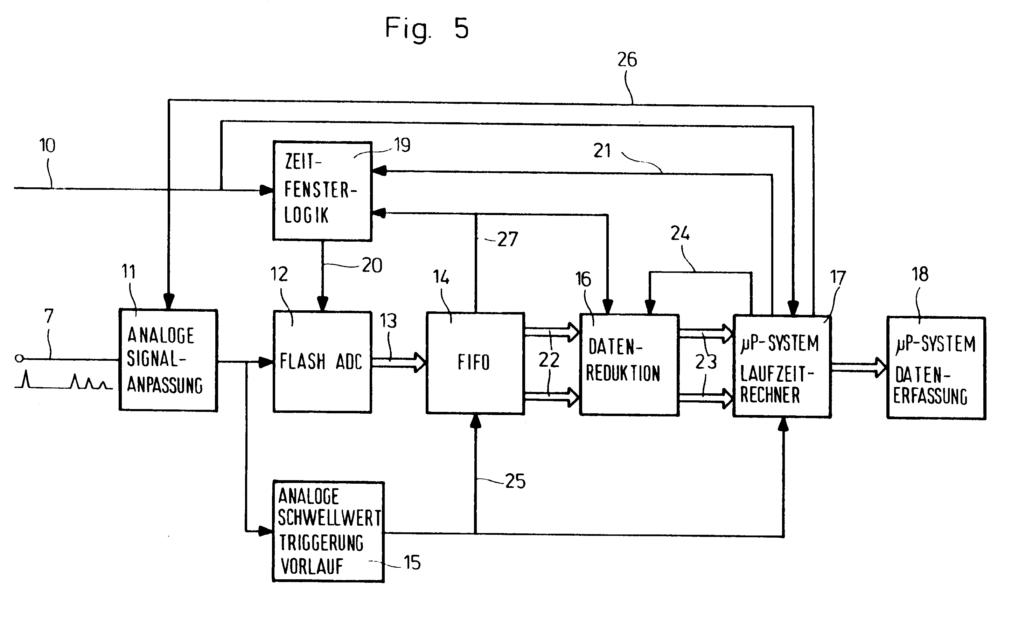

Anhand des Blockdiagrammes von Fig. 5 wird nun die Verarbeitung eines Echosignals erläutert.

Das Echosignal 7 wird zunächst gleichgerichtet und geglättet 11 und anschließend einem A/D-Wandler 12 zugeführt, der das Signal mit einer Auflösung von 8 Bit digitalisiert. Die Korrosionsmessung wird üblicherweise mit Sensoren ausgeführt, die eine Resonanzfrequenz von 5 MHz haben. Um Spitzenamplituden eindeutig zu erfassen, wird die A/D-Wandlung mit einer Sampling Rate von 28 MHz durchgeführt. Die digitalen Amplitudenwerte 13 werden dann in einem FIFO-Zwischenspeicher 14 abgelegt. Die Speichertiefe beträgt je nach zu prüfender Wandstärke 256 bzw. 512 Byte, was einem Datenerfassungszeitraum von 9 bzw. 18 µs entspricht. Die Digitalisierung beschränkt sich deshalb lediglich auf die Impulsfolge Vorwandecho und darauffolgende Rückwandechos.

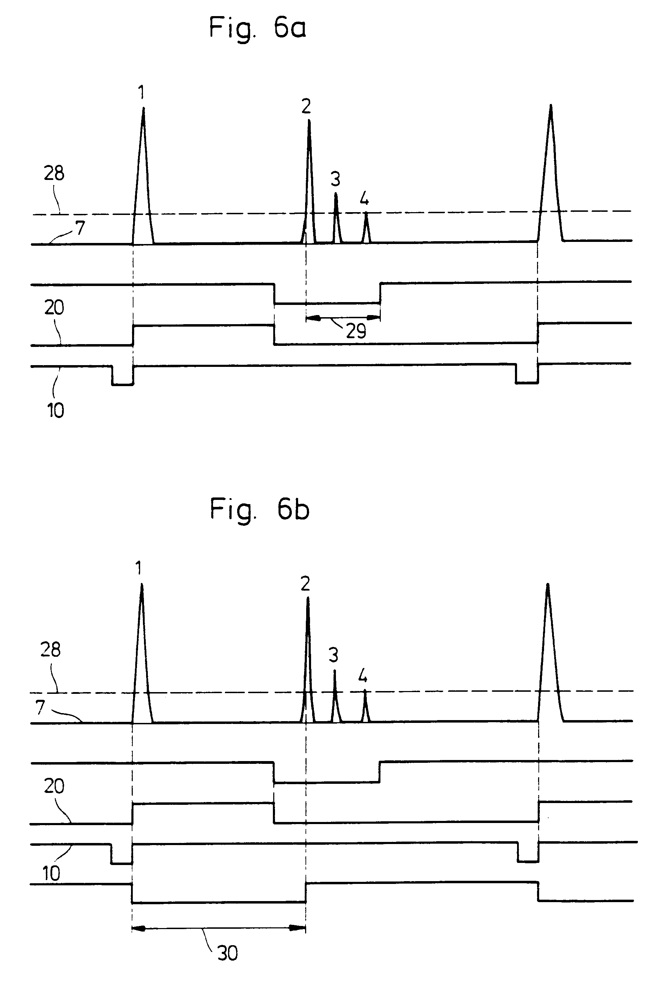

Die Bestimmung der Vorlaufzeit erfolgt in gewohnter Weise mit Hilfe eines getakteten Zählers, der durch den Sendeauslöseimpuls (SAP) 10 gestartet und durch den Innenwandechoimpuls 2 bei Überschreiten der vorgegebenen Triggerschwelle wieder gestoppt wird 15. Die Vorlaufstrecke entspricht somit der Zeitdifferenz 30 zwischen Sendeimpuls 1 und Vorwandechoimpuls 2 - Fig. 6b.

Die A/D-Wandlung wird nach Ablauf eines variablen Zeitfensters ("Start ADC") 20 ausgelöst. Dieses variable Zeitfenster kann über eine gesonderte Hardware-Schaltung 19 oder vom Laufzeitrechner 17, 21 generiert werden. Bei der Generierung der Zeitblende vom Laufzeitrechner können Änderungen des Sensorabstandes von der Rohrinnenwand, die z. B. durch Sensorträgerdeformation entstehen können ausgeglichen werden. Dadurch ist es immer möglich ein optimales Wandlungsfenster zu erzeugen. Die Generierung der Zeitblende ist als selbstlernendes System ausgelegt. Um die gesamte Echo-Impulsfolge zu erfassen, muß die Blendenbreite so eingestellt werden, daß sie die kleinste zu erwartende Vorlaufzeit nicht übersteigt.

Sobald das Vorwandecho 2 die Vorlauf-Triggerschwelle 28 überschreitet und somit den Zähler stoppt, werden die bis zu diesem Zeitpunkt abgespeicherten Daten gelöscht 25 und erneut 256 bzw. 512 Werte 29 eingelesen. Somit wird bei ausreichend starken Echosignalen eine optimale Nutzung der vorhandenen Speicherkapazität gewährleistet. Die Datenerfassung 29 beginnt dann sofort bei Eintreffen des Vorwandechos 2 und schließt neben dem ersten Rückwandecho noch weitere durch Mehrfachreflexionen erzeugte Folgeechos 4 mit ein. Fig. 6a.

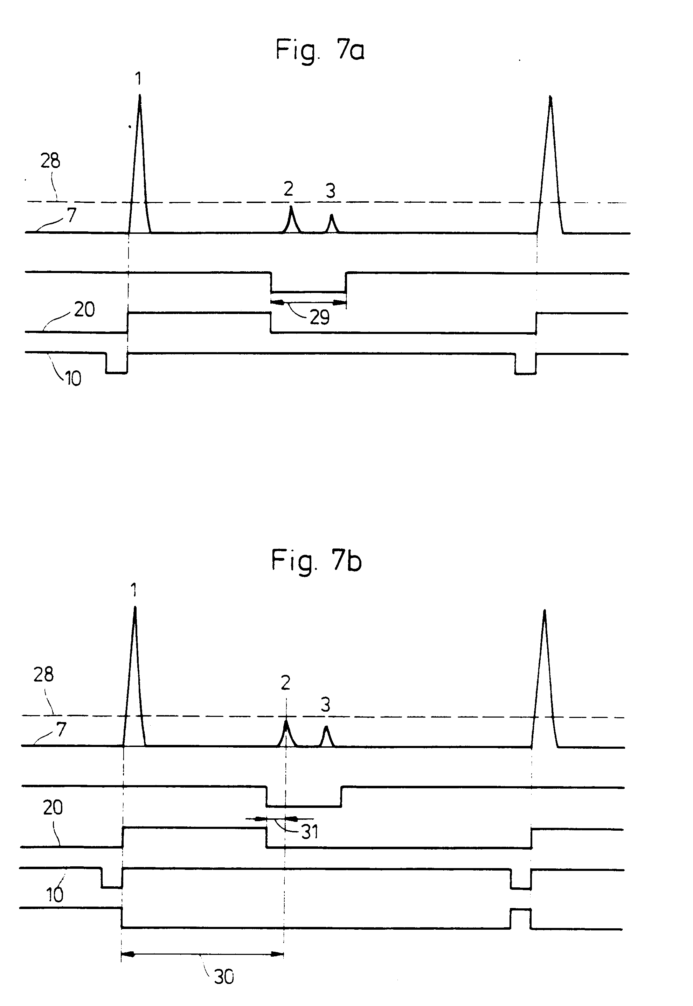

Bleibt das Echosignal 7 unterhalb der Triggerschwelle 28 so wird der FIFO-Speicher nicht gelöscht, und die Digitalisierung endet nach 9 bzw. 18 µs 29 (Fig. 7a). Die anschließende digitale Signalauswertung beschränkt sich in diesem Fall im wesentlichen auf die Bestimmung der Vorlaufstrecke: die Vorlaufzeit 30 errechnet sich bei nicht erfolgter Vorlauftriggerung dann als Summe aus der Breite der Blende "Start ADC" 20 und der Zeitzuordnung des ersten abgespeicherten Echoimpulses 31 (Fig. 7b).

Aufgrund der Datenmenge, die je nach Abtastdauer um den Faktor 128 bzw. 256 über der Datenmenge des bisherigen Datenaufzeichnungssystems (pro Schuß ein Byte für die Vorlaufstrecke und ein Byte für die Wanddicke) liegt, muß eine digitale on-line-Berechnung der Laufzeit durchgeführt werden.

Bei einer Schußfolge von 400 HZ beträgt bei 64 sequentiell angesteuerten Sensoren der zeitliche Abstand zwischen zwei Sendeimpulsen 39 µs. Einen Algorithmus zur Laufzeitbestimmung, der bis zu 512 Datenwerte abarbeiten muß, in 39 µs ablaufen zu lassen, ist mit Hilfe eines Mikroprozessors jedoch nicht möglich. Deshalb muß vor der Übergabe der digitalisierten Werte 22 an den Prozessor eine Datenreduktion durchgeführt werden. Diese Datenreduktion 16 kann nur durch eine schnelle Hardware erreicht werden. Dabei muß der reduzierte Datensatz 23 sämtliche zur Laufzeitbestimmung relevanten Informationen der ursprünglichen Impulsfolge beibehalten. Von Interesse sind die Lage der Impulse, deren maximale Amplituden, sowie die Impulsform.

Ferner werden nur die Impulse berücksichtigt, die eine vorgewählte digitale Schwelle überschreiten.

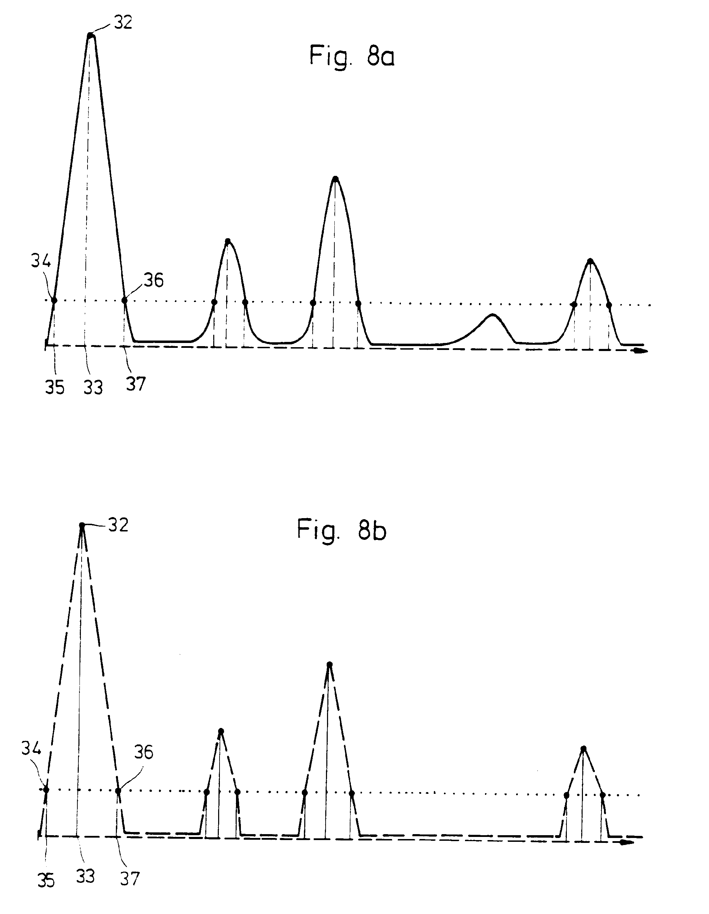

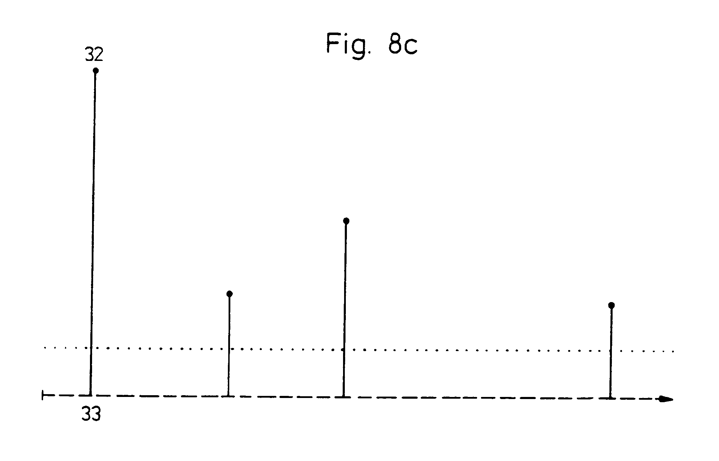

Hierzu werden die digitalisierten Amplitudenwerte aus dem FIFO-Zwischenspeicher ausgelesen und mit der digitalen Schwelle 24 verglichen. Liegt die Signalamplitude unterhalb des Schwellwertes, so wird der digitalisierte Wert ausselektiert. Überschreitet das Signal den Schwellwert so wird dieser Wert 34 mit dessen zeitlicher Zuordnung 35 dem Auswerterechner übergeben; die darauf folgende Werte bis zum Amplitudenmaximum werden wiederum ausgefiltert. Das Amplitudenmaximum 32 mit der zeitlichen Zuordnung 33 wird abgespeichert; ebenso der darauffolgende Zeitwert 37 der Unterschreitung der Schwelle (Fig. 8a).

Der digitale Schwellwert kann per Hardware voreingestellt oder vom Laufzeitrechner generiert werden 24. Bei der Generierung vom Laufzeitrechner kann der Schwellwert sich selbst lernend an Wandungsrauhigkeiten und Sensoreigenschaften angepaßt werden. Als Kriterium zur Veränderung des Schwellwertes dient die Anzahl der Impulse die den Schwellwert übersteigen.

Speichert man zusätzlich zu den Impulsspitzen auch noch die Amplituden- und Zeitwerte bei Überschreiten 34, 35 bzw. Unterschreiten 36, 37 des digitalen Schwellwertes ab, so kann eine Aussage über die Form, d. h. die Breite der Echoimpulse getroffen werden. Das ursprüngliche Echobild läßt sich so mit geringem Bedarf an Speicherplatz aufzeichnen und kann anhand dieser reduzierten Datensätze nahezu vollständig rekonstruiert werden. (Fig. 8b)

Je nach Leistungsfähigkeit des verfügbaren Mikroprozessors kann eine weitere Reduktion der Daten erforderlich sein. In diesem Fall werden nur die Höhe 32 der Impulse und deren zeitliche Zuordnung 33 an den Auswerterechner übergeben, der ursprüngliche Datensatz reduziert sich also auf die Impulsmaxima. (Fig. 8c)

Das Ultraschallechosignal einzelner Sensoren kann durch äußere Einflüsse so gedämpft werden, daß die Reflexions-Impulse untershalb der minimalen Triggerschwellwerte liegen. Nur eine individuelle, von der Dämpfung abhängige Verstärkungsanpassung 26 kann dann noch eine Laufzeitmessung ermöglichen.

Als Maß für die Verstärkungsanpassung dienen die über eine vorgebene Anzahl von Erregerimpulsen ermittelten Maximalamplituden der Reflexions-Impulse. Einzelne Ausreißer bleiben unberücksichtigt.

Nach Übernahme der reduzierten Datensätze liegen die Aufgaben des Mikroprozessorsystems darin
- die zur Bestimmung der Laufzeit relevanten Echoimpulse herauszufiltern,
- die Laufzeit des Echosignals in der Rohrwandung anhand der zeitlichen Abstände der Impulsspitzen zu ermitteln,
- die Gültigkeit der erhaltenen Ergebnisse zu überprüfen,
- die Vorlaufstrecke mit Hilfe des internen Zählers zu erfassen, bzw. bei nicht erfolgter Vorlauftriggerung zu berechnen.

Bei rauher Oberfläche können mehrere Vorwandimpulse empfangen werden. Der Mikroprozessor wählt aus mehreren Vorwandimpulsen, die in einem definierten Zeitrahmen liegen müssen, den mit der höchsten Amplitude aus. Somit kann eine Korrektur der Vorwandlaufzeit erfolgen.

Bei starker Korrosion kann es vorkommen, daß der auf physikalischen Gesetzmäßigkeiten und Erfahrenswerte beruhende Algorithmus keine eindeutige Laufzeitmessung durchführen kann. In diesem Fall wird das gesamte reduzierte Echobild in einem Speicher abgelegt. Nach Beendigung des Prüflaufes kann dann eine manuelle Laufzeitbestimmung vorgenommen werden.

Da die Bestimmung der Laufzeit on-line erfolgen muß, ist aufgrund der nur begrenzt zu Verfügung stehenden Rechenzeit eine Optimierung des Auswertealgorithmus hinsichtlich der am häufigsten auftretenden Fehlersituationen vorzunehmen.

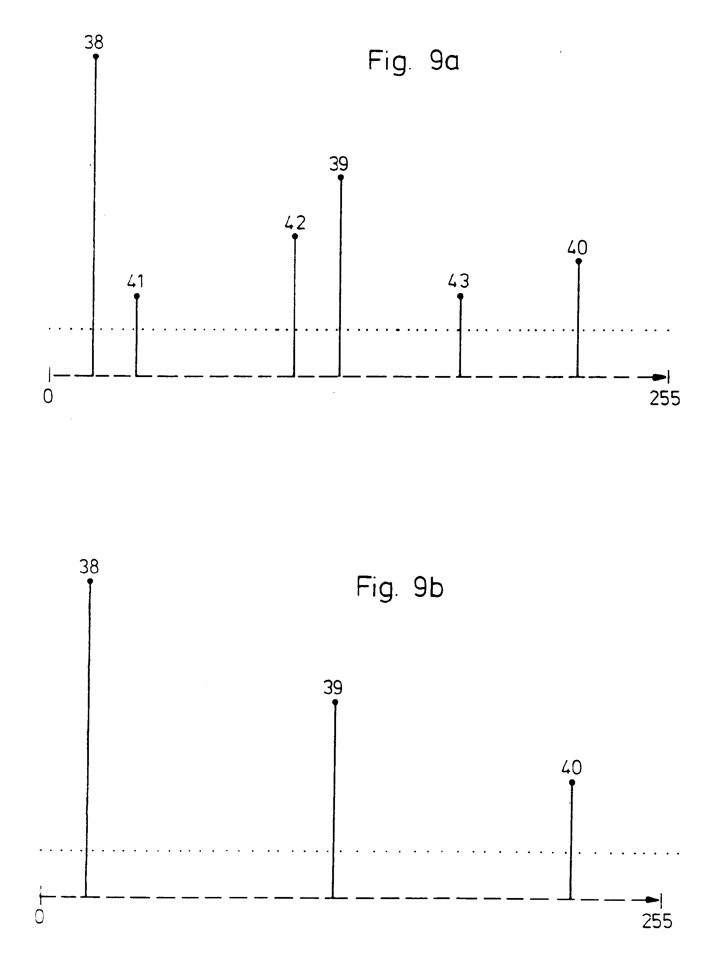

Nach dem Einlesen der reduzierten Daten 23 (Amplituden und zeitliche Zuordnung der Impulsspitzen), Fig. 9a, müssen zunächst die zur Bestimmung der Laufzeit relevanten Impulse aussortiert werden. Dabei wird davon ausgegangen, daß die Impulsfolge (Vorwandecho), 1. Rückwandecho, 2. Rückwandecho, ...) monoton abfallende Amplituden 38, 39, 40 aufweist. Dazwischenliegende Echoimpulse kleinerer Amplitude werden als Störsignale 41, 42, 43 betrachtet. Hierzu werden die Impulse zeitgemäß von hinten nach vorne überprüft: ein Echoimpuls gilt dann als relevant und wird abgespeichert, wenn seine Amplitude größer oder nahezu gleich groß als die des zuletzt abgespeicherten Impulses ist. Fig. 9b.

Anschließend wird die so gefilterte Impulsfolge anhand der am häufigsten auftretenden Echobildvarianten untersucht und die Laufzeit des Ultraschallsignals in der Rohrwandung ermittelt. Das Ergebnis wird dann mit dem aktuellen Referenzwert bzw. mit einem Erwartungswert verglichen.

Ein Meßwert gilt als besonders sicher, wenn der zeitliche Abstand zwischen Eintrittsecho und erstem Rückwandecho mit dem Abstand zwischen erstem und zweitem Rückwandecho übereinstimmt. Dieser Wert gilt dann als neuer Referenzwert. Der Erwartungsbereich für den nächsten zu ermittelnden Wanddickenwert ergibt sich aus dem letzten Wanddickenwert bzw. dem Referenzwert +/- einem von der Wandstärke abhängigen Toleranzband.

An sich ändernden Wandstärken paßt sich das Toleranzband selbstlernend an.

Das herkömmliche Verfahren zur Laufzeitmessung nach der Impuls-Reflexionsmethode beschränkt sich bei der Wandstärkenmessung lediglich auf das Vorwandecho und das erste Rückwandecho. Aufgrund der erschwerten Bedingungen unter denen eine Korrosionsprüfung in Pipelines durchgeführt wird, führt dieses Verfahren häufig zu Fehlmessungen bzw. Meßwertausfällen. Eine wesentliche Verbesserung der Signalauswertung wird beim erfindungsgemäßen Verfahren dadurch erzielt, daß der gesamte Echosignalverlauf, d. h. Vorwandecho, erstes Rückwandecho und die durch Mehrfachreflexionen erzeugten folgenden Rückwandechos in die Betrachtung miteinbezogen und mit Hilfe eines Mikroprozessor-Systems ausgewertet wird.

Dies erfordert zunächst die Digitalisierung es Echosignals und, da die Auswertung on-line erfolgen muß, eine Reduzierung der Daten mit Hilfe einer schnellen Hardware.

Neben der Bestimmung der Laufzeiten ermöglicht der Einsatz des Mikroprozessor-Systems eine Überwachung der Signalamplitude und damit eine Regelung der Signalverstärkung. Außerdem kann die Lage des Zeitfensters zur Aufnahme der Echoimpulsfolge optimal an den Signalverlauf angepaßt werden.

Sollte infolge starker Korrosion eine eindeutige Laufzeitbestimmung on-line nicht möglich sein, so wird das gesamte reduzierte Echobild abgespeichert. Eine weiterführende Auswertung des Echobildes kann somit nach Beendigung des Prüflaufes durchgeführt werden.

### Bezugszeichenliste

- 1: Ultraschall-Sendeimpuls
- 2: Vorwandechoimpuls
- 3: 1. Rückwandechoimpuls
- 4: 2. Rückwandechoimpuls
- 5: 3. Rückwandechoimpuls
- 6: 4. Rückwandechoimpuls
- 7: Ultraschall-Echosignal
- 8: Meßtor Wandstärke
- 9: Meßsperrblende
- 10: Sende-Auslöse-Impuls SAP
- 11: Verstärker/Filter-Modul
- 12: Analog/Digital-Wandler
- 13: Digitalisierte Amplitudenwerte
- 14: FIFO-Zwischenspeicher
- 15: Analoge Schwellwert-Triggerung zur Bestimmung der Vorlaufzeit
- 16: Datenreduktion
- 17: µP-System Laufzeitrechner
- 18: µP-System Datenerfassung
- 19: Zeitfenster-Logik
- 20: Steuersignal "Start-ADC"
- 21: Steuerleitung "Zeitfenster-Einstellung"
- 22: Wertepaare (Amplitude, Zeitzuordnung)
- 23: Reduzierte Daten (Amplitude, Zeitzuordnung)
- 24: Digitaler Schwellwert (Datenreduktion)
- 25: Reset-Leitung (Löschen des FIFO)
- 26: Steuerleitung "Verstärkungsregelung"
- 27: Steuerleitung "FIFO voll"
- 28: Analoge Triggerschwelle (Vorlauf-Bestimmung)
- 29: Zeitraum der Datenerfassung
- 30: Vorlaufzeit
- 31: Zeitzuordnung des ersten abgespeicherten Echoimpulses
- 32: Amplitude des Impulsmaximums
- 33: Zeitzuordnung des Impulsmaximums
- 34: Amplitude bei Überschreiten der digitalen Schwelle
- 35: Zeitzuordnung bei Überschreiten des Schwellwertes
- 36: Amplitude bei Unterschreiten der digitalen Schwelle
- 37: Zeitzuordnung bei Unterschreiten des Schwellwertes
- 38, 39, 40: Relevante Echoimpulse
- 41, 42, 43: Störimpulse

## Patentansprüche

1. Verfahren zur Korrosionsprüfung von Pipelines mit Hilfe von Laufzeitmessungen von Ultraschall bei der Impuls-Reflexionsmethode, bei dem von einem Prüfkopf mindestens ein möglichst stoßwellenförmiger Erregerpuls ausgesandt wird, der eine Vorlaufsstrecke bis zu einem zu untersuchenden Objekt mit Vor- und Rückwand zurücklegt, an dessen Vor- und Rückwand jeweils mindestens ein Reflexions-Impuls erzeugt wird, und bei welchem die reflektierten Impulse durch mindestens einen Ultraschalldetektor erfaßt und mit einer analogen Signalanpassung verstärkt werden, dadurch gekennzeichnet, daß die Korrosionsprüfung in den meisten Fällen on-line erfolgt, wobei
a) ein Zeitfenster für die Aufnahme der dem Erregerimpuls folgenden Reflexions-Impulse festgelegt wird, innerhalb dessen alle aufeinanderfolgenden Reflexionsimpulse digitalisiert werden, dann
b) die im Zeitfenster liegenden Reflexions-Impulse digital gefiltert und parametrisiert werden, wobei für jeden Reflexionsimpuls Zeit und Amplitude für das Maximum und beim Überschreiten und beim Unterschreiten eines digitalen Schwellwertes erfaßt werden, darauf
c) die gefilterten und parametrisierten Reflexions-Impulse einer Rechnereinheit zugeführt und mit einem vorgegebenen Algorithmus anhand veränderbarer Kriterien bewertet werden, wobei nur Impulse mit monoton abfallenden Amplituden als relevant gelten und schließlich
d) je nach Bewertung beim on-Line-Verfahren die Vorlaufzeit und die Wandstärkelaufzeit des Objekts ermittelt und abgespeichert oder beim off-Line-Verfahren alle gefilterten und parametrisierten Reflexions-Impulse die zu einem Erregerpuls gehören abgespeichert werden.

2. Verfahren nach Anspruch 1, dadurch gekennzeichnet, daß durch die Bewertung in Verfahrensschritt c) die Verstärkung der analogen Signalanpassung verändert wird.

3. Verfahren nach Anspruch 1 oder 2, dadurch gekennzeichnet, daß das Zeitfenster selbstlernend optimiert wird.

4. Verfahren nach Anspruch 1 oder einem der folgenden, dadurch gekennzeichnet, daß bei hohen Abtastraten der Digitalisierung die Daten bevor sie der Filterung unterzogen werden in einem schnellen Speicher zwischengespeichert werden.

5. Verfahren nach Anspruch 1 oder einem der folgenden, dadurch gekennzeichnet, daß bei der parameterisierung von jedem Impuls mindestens ein charakteristischer Punkt ermittelt wird.

6. Verfahren nach Anspruch 1 oder einem der folgenden, dadurch gekennzeichnet, daß mindestens zwei Rückwandechos eines Erregerpulses erfaßt werden.

## Claims

1. Method for examining the corrosion of pipelines by means of measurements of ultrasound transit times according to the pulse reflection method, wherein at least one exciter pulse, which resembles a shock wave as much as possible, is emitted by a test probe and covers a lead distance up to an object which is to be tested and which has a front and rear wall, at least one respective reflection pulse being generated at the front and rear walls of said object, and wherein the reflection pulses are detected by at least one ultrasonic detector and are amplified by an analog signal adaptor, characterised in that the corrosion is examined in an on-line manner in most cases, wherein
a) a time window for receiving the reflection pulses following the exciter pulse is determined, and all of the successive reflection pulses are digitalised within said time window, then
b) the reflection pulses situated in the time window are digitally filtered and parametrised, time and amplitude being detected for each reflection pulse for the maximum and when a digital threshold is exceeded or not reached, whereupon
c) the filtered and parametrised reflection pulses are supplied to an arithmetic unit and evaluated with a prescribed algorithm with reference to variable criteria, only pulses with monotonically decreasing amplitudes being relevant, and finally,
d) depending on the evaluation during the on-line process, the transit time and the wall thickness transit time of the object are determined and stored, or all of the filtered and parametrised reflection pluses, which belong to an exciter pulse, are stored during the off-line process.

2. Method according to claim 1, characterised in that the amplification of the analog signal adaptor is varied according to the evaluation in method step c).

3. Method according to claim 1 or 2, characterised in that the time window is optimised in a self-learning manner.

4. Method according to claim 1 or one of the following claims, characterised in that, before it is subjected to the filtering process, the data is temporarily stored in a high speed memory with high scanning rates for the digitalisation.

5. Method according to claim 1 or one of the following claims, characterised in that at least one characteristic dot is determined when parametrising each pulse.

6. Method according to claim 1 or one of the following, characterised in that at least two rear wall echoes of an exciter pulse are detected.

## Revendications

1. Procédé pour le contrôle de la corrosion de pipelines à l'aide de mesures de temps de propagation d'ultrasons avec la méthode de reflexion d'impulsions dans lequel on émet par un palpeur au moins une impulsion d'excitation le plus possible sous forme d'ondes de choc, qui parcourt un trajet de propagation jusqu'à un objet à contrôler ayant une paroi avant et une paroi arrière, on crée sur sa paroi avant et sa paroi arrière respectivement au moins une impulsion de reflexion et les impulsions réfléchies sont captées par au moins un détecteur d'ultrasons et sont renforcées avec une adaptation analogique du signal, caractérisé en ce que le contrôle de corrosion se fait en série dans la plupart des cas, et
a) une fenêtre de temps est établie pour recevoir les impulsions de reflexion suivants l'impulsion d'excitation, fenêtre à l'intérieur de laquelle les impulsions de réflexion se succédant sont numérisées, ensuite.
b) les impulsions de reflexion situées dans la fenêtre de temps sont filtrées numériquement et sont paramètrées, temps et amplitude de chaque impulsion de reflexion étant captés pour le maximum et au dépassement vers le haut et au sous-dépassement d'une valeur de seuil numérique, après quoi,
c) les impulsions de reflexion filtrées et paramétrées sont amenées à un ordinateur et sont valorisées avec un algorithme prédéfini à partir de critères modifiables, seules les impulsions avec des amplitudes chutant de maniere monotone étant valorisées comme significatives et enfin,
d) Selon l'évaluation dans le cas d'un procédé en ligne le temps de propagation et le temps de propagation dans l'épaisseur de paroi de l'objet est determine et mémorisé ou bien dans le cas de procédés hors ligne toutes les impulsions de réflexion filtrées et paramétrées qui font partie d'une pulsation d'excitation sont mémorisées.

2. Procédé selon la revendication 1, caractérisé en ce que par suite de l'évaluation dans la phase de procédé c) le renforcement de l'adaptation de signal analogue est modifiée.

3. Procédé selon la revendication 1 ou 2, caractérisé en ce que la fenêtre de temps est optimisée de manière auto-adaptative.

4. Procédé selon la revendication 1 ou une des suivantes, caractérisé en ce que pour des vitesses d'exploration élevées de la numérisation, les données avant d'être soumises au filtrage sont stockées de manière intermédiaire dans une mémoire rapide.

5. Procédé selon la revendication 1 ou une des suivantes, caractérisé en ce que lors du calcul des paramètres de chaque impulsion au moins un point caractéristique est déterminé.

6. Procédé selon la revendication 1 ou une des suivantes, caractérisé en ce qu'au moins deux échos de paroi arrière d'une impulsion excitatrice sont captés.
